# FASCICULE DE BREVET EUROPEEN

(11) **EP 2 616 890 B1**
(45) Date de publication et mention de la délivrance du brevet: **08.01.2020**
(21) Numéro de dépôt: 11769932.2
(22) Date de dépôt: 15.09.2011
(51) Int. Cl.: G05B 19/042, E05F 15/00, E06B 9/88

(54) **CAPTEUR COMMUNICANT AUTONOME ET EXTRA-PLAT**
EXTRAFLACHER EIGENSTÄNDIGER KOMMUNIKATIONSSENSOR
EXTRA-FLAT STAND-ALONE COMMUNICATING SENSOR

(30) Priorité: 15.09.2010 FR 1057376
(43) Date de publication de la demande: 24.07.2013
(73) Titulaire: SOMFY ACTIVITES SA, 74300 Cluses (FR)
(72) Inventeur: ROUSSEAU, Fabien, 74300 Magland (FR); RAMUS, Michel, 74800 Amancy (FR); BECHEVET, Delphine, 74330 Poisy (FR); LOUHICHI, Omar, 01200 Bellegarde Sur Valserine (FR)
(74) Mandataire: Bugnion Genève
(86) Numéro de dépôt international: PCT/IB2011/054032
(87) Numéro de publication internationale: WO 2012/035506

(56) Documents cités:
- EP-A1- 0 218 341
- EP-A1- 1 598 518
- EP-A1- 2 067 922

## Description

L'invention concerne un capteur de mouvement pour dispositif domotique de fermeture dans un bâtiment, comprenant un élément enroulable sur un tube d'enroulement disposé dans un caisson. Un tel élément enroulable est par exemple un volet roulant. Ce volet roulant est raccordé à un équipement domotique tel qu'un actionneur électrique qui permet l'enroulement ou le déroulement d'un tablier, constituant l'élément enroulable. Une première extrémité de l'élément enroulable est raccordée au tube d'enroulement, et une deuxième extrémité, ou extrémité libre, est raccordée à une barre de charge, qui contribue par son poids à entraîner l'élément enroulable lors d'une phase de déroulement. Une disposition analogue comprenant un actionneur électrique, un dispositif d'enroulement et une barre de charge est rencontrée dans un volet roulant à lames orientables, ou encore dans une jalousie avec tablier constitué de lames orientables.

Du fait du caractère automatique des manœuvres, la barre de charge est susceptible de rencontrer des obstacles lors de son mouvement. Aussi est-il connu, par exemple des brevets GB 2 180 976, EP 1 014 322, DE 200 00 682, EP 1 245 779, EP 2 067 922, de disposer tout ou partie d'un capteur de mouvement au niveau de la barre de charge ou lame finale.

Ce capteur de mouvement est généralement muni de moyens de communication, tel un émetteur radiofréquences. Il est en outre utilisé pour envoyer un signal d'alarme vers l'actionneur ou directement vers un autre équipement domotique tel qu'une centrale d'alarme en cas de mouvement de la barre de charge ne résultant pas d'une activation de l'actionneur. Cette situation est celle d'une tentative d'intrusion dans le cas d'un volet roulant ou le résultat d'un vent violent agissant sur les lames orientables.

Il est également connu de la demande de brevet EP 1 944 449 de disposer un capteur de mouvement muni d'un accéléromètre sur la barre de charge d'un store en vue de détecter un vent violent et d'émettre alors une commande de repli du store. Dans le brevet EP 1 299 792, des moyens de mesure assurent le réveil de moyens de traitement.

Le brevet EP 1 014 322 décrit un appareil de prévention de cambriolage dont le capteur-émetteur est inséré dans une fausse lame de l'élément enroulable, située à son extrémité inférieure.

Pour éviter que la barre de charge soit visible en position enroulée, et qu'elle contribue à masquer une partie de la baie, certains fabricants de volets roulants préfèrent que le mouvement d'enroulement ne s'arrête qu'une fois la barre de charge à l'intérieur du caisson. Or, la plupart des caissons possèdent des ouvertures de plus en plus fines pour éviter les déperditions d'énergie par le caisson.

La demande de brevet FR 10 50 288 décrit en particulier un capteur de mouvement rapporté sur une barre de charge de volet et apte à pénétrer dans un caisson, mais sans fournir d'enseignement quant à sa réalisation.

De plus, les volets roulants de qualité sont le plus souvent en aluminium. D'où les problèmes mentionnés dans l'art antérieur, du fait d'un couplage parasite de l'antenne d'émission du capteur avec la surface conductrice du volet.

La demande de brevet FR 2 822 888 décrit un volet roulant pour lequel une des lames, notamment en aluminium, est découpée de manière à définir une antenne d'émission pour un dispositif de détection inclus dans la lame.

La demande de brevet JP 3 707 045 décrit un volet roulant muni d'une lame finale spécifique, de même encombrement en épaisseur effective que les lames du tablier et contenant des moyens de détection et de transmission.

Le document EP1598518A1 se rapporte à un dispositif de détection d'obstruction pour volet roulant comprenant un boitier avec une unité de détection de contact, une unité de contrôle et un appareil de transmission sans fil capable d'émettre un signal lors de la détection du contact avec un objet.

L'art antérieur propose donc la réalisation d'une barre de charge spécifique, par exemple en matière plastique, avec un logement creux pour le capteur ou propose la réalisation de lames aluminium spécifiques avec une ou plusieurs fentes en relation avec la longueur d'onde du signal. Cela va cependant à l'encontre d'une amélioration fonctionnelle du volet roulant postérieurement à son installation.

L'invention remédie à ces problèmes ou inconvénients de l'art antérieur, notamment en permettant la réalisation d'un capteur de mouvement aussi plat que possible et néanmoins apte à remplir les fonctions de communication attendues, y compris lorsqu'il est disposé sur une barre de charge en aluminium. Ainsi, un capteur de mouvement peut être rapporté à la barre de charge et non intégré dans celle-ci, y compris dans des circonstances où le volet doit impérativement s'enrouler complètement dans le caisson.

L'invention est ainsi définie selon la revendication 1. Selon l'invention, le boîtier peut comprendre des moyens de raccordement du moyen de stockage d'énergie et/ou du moyen inertiel d'alimentation conditionnelle au premier circuit imprimé.

Selon l'invention, le moyen de stockage d'énergie peut comprendre au moins une pile primaire.

Selon l'invention, la pile primaire peut être connectée au premier circuit imprimé par des contacts flexibles.

Selon l'invention, le moyen inertiel d'alimentation conditionnelle peut comprendre une masse mobile conductrice maintenue par un élément flexible conducteur.

Selon l'invention, le moyen inertiel d'alimentation conditionnelle peut comprendre des contacts fixes disposés de sorte à établir un contact électrique lors d'un mouvement de la masse mobile conductrice.

Selon l'invention, l'élément flexible conducteur et les contacts fixes peuvent être raccordés au premier circuit imprimé.

Selon l'invention, la masse mobile peut comprendre une pile primaire.

Selon l'invention, la masse mobile peut se trouver guidée par des bords internes du premier circuit imprimé.

Selon l'invention, la masse mobile peut se trouver guidée par des parois internes du boîtier.

Selon l'invention, le boîtier peut être non-conducteur.

Selon l'invention, le premier circuit imprimé peut comprendre un premier plan de masse et une antenne imprimée multispire, disposés sur une face supérieure du premier circuit imprimé pour former une antenne dipolaire, cette face supérieure jouxtant une face du boîtier la plus éloignée d'une face de boîtier apte à entrer en contact avec la barre de charge.

Selon l'invention, le premier circuit imprimé peut être de type multicouche et comprendre un plan de masse unique dans une couche intermédiaire et une antenne imprimée à éléments parallèles disposée sur une face supérieure du premier circuit imprimé pour former une antenne réseau, le plan de masse unique étant intercalé entre l'antenne imprimée et une face de boîtier apte à entrer en contact avec la barre de charge.

Selon l'invention, le capteur de mouvement peut comprendre un deuxième circuit imprimé comprenant un plan de masse sur une face inférieure et une antenne imprimée à éléments parallèles disposée sur une face supérieure pour former une antenne réseau, le plan de masse étant intercalé entre l'antenne imprimée et une face de boîtier apte à entrer en contact avec la barre de charge.

Selon l'invention, le capteur de mouvement peut comprendre une antenne obtenue par dépôt conducteur sur une face du boîtier la plus éloignée d'une face de boîtier apte à entrer en contact avec la barre de charge.
La figure 1 représente schématiquement un dispositif domotique comprenant un capteur de mouvement selon l'invention.
La figure 2 représente les différents blocs fonctionnels du capteur de mouvement.
La figure 3 représente schématiquement l'emplacement de composants du capteur de mouvement, selon une vue de face, dans un premier mode de réalisation d'une antenne.
Les figures 4A à 4D représentent des coupes successives du capteur de mouvement selon des plans de coupe perpendiculaires à la barre de charge de l'élément enroulable.
La figure 5 représente en coupe une cellule de réveil du capteur de mouvement.
La figure 6 représente une variante de réalisation d'une cellule de réveil du capteur de mouvement.
La figure 7 représente un deuxième mode de réalisation de l'antenne du capteur de mouvement.

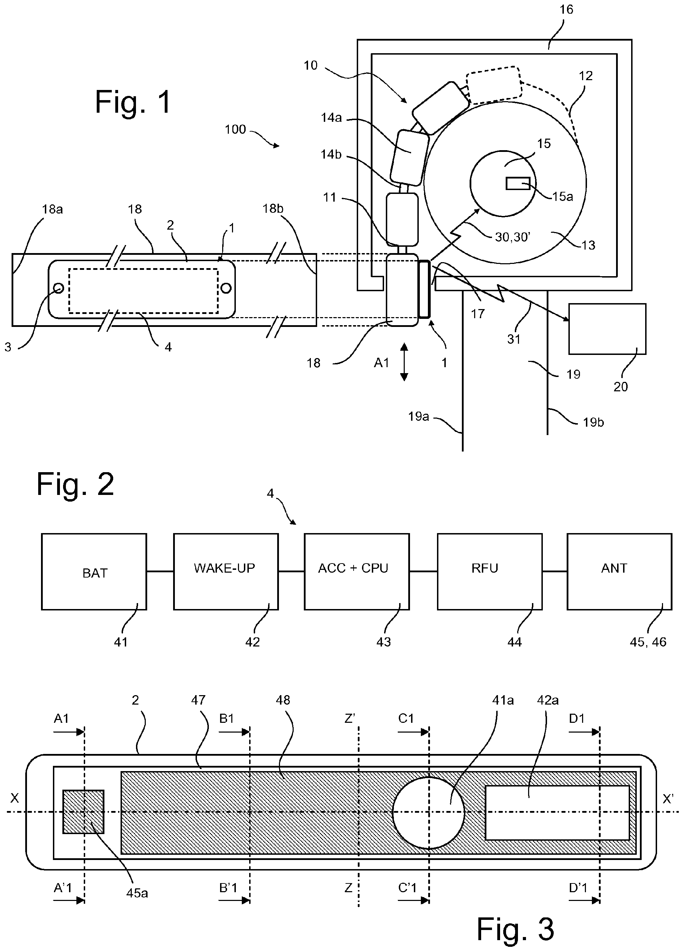

La figure 1 représente schématiquement un dispositif domotique 100 comprenant un capteur de mouvement 1 selon l'invention. La partie droite de la figure, telle que désignée par la flèche de la référence 100, est une vue de côté simplifiée et partielle d'un volet roulant, dans une position enroulée. Le volet roulant constitue un élément enroulable 10, dont une première extrémité 11 est libre, tandis qu'une deuxième extrémité 12 est raccordée à un tube d'enroulement 13. Le volet roulant comprend des lames 14a reliées les unes aux autres par des articulations 14b. Les articulations sont susceptibles de donner un jeu angulaire entre deux lames consécutives. Elles peuvent aussi dans certains cas autoriser un écartement variable entre les lames. Le tube d'enroulement comprend un actionneur 15 permettant son entraînement dans deux sens de rotation, provoquant la fermeture du volet lors d'un déroulement et son ouverture lors d'un enroulement. Le tube d'enroulement est disposé dans un caisson 16, par exemple en acier plié, comprenant une ouverture ou fente longitudinale 17, traversée par le volet roulant lors de son mouvement. L'extrémité libre du volet est fixée à une barre de charge 18.

Sur la barre de charge est rapporté un capteur de mouvement 1, dont une fonction principale est la détection de modification de mouvement dans la direction principale du mouvement, représentée par une double flèche A1, lors du déroulement ou de l'enroulement du volet. Par direction principale du mouvement, on entend la direction au sens fonctionnel : la verticale dans le cas d'un volet roulant de façade. Si le volet roulant est installé sur une fenêtre de toit, inclinée selon la pente du toit, la direction principale du mouvement est celle du toit. Le capteur permet préférentiellement de détecter également une horizontalité de la lame finale (celle-ci étant modifiée par exemple lors d'un blocage du volet dans une des coulisses ou par la présence d'un obstacle proche d'une coulisse) et/ou des secousses dues au vent ou à une tentative d'effraction, dans un plan perpendiculaire au plan de déplacement du volet.

Comme dans l'art antérieur, le capteur de mouvement est apte à émettre un premier signal radiofréquences 30 vers l'actionneur et/ou un deuxième signal radiofréquences 31 vers une alarme 20 (ou un autre dispositif domotique) lors d'une variation de mouvement dans la direction principale du mouvement.

Le capteur de mouvement est fixé extérieurement à la barre de charge, mais entre celle-ci et une fenêtre 19 présentant une face externe 19a et une face interne 19b, intérieure à l'habitation. Le capteur de mouvement n'est donc pas visible depuis l'extérieur. Il n'est pas accessible depuis l'extérieur lorsque le volet est en position basse.

Du fait de sa très faible épaisseur, préférentiellement inférieure à 1 cm et par exemple comprise entre 5 et 8 mm, le capteur de mouvement ne gêne pas le passage de la barre de charge dans l'ouverture 17.

En position basse, non représentée, le capteur de mouvement peut également s'accommoder d'un espace réduit entre le rebord de la fenêtre et le volet roulant.

La partie gauche de la figure 1 représente en vue de face la lame finale et le capteur de mouvement. La lame finale comprend deux extrémités 18a et 18b insérées dans des coulisses latérales du volet, non représentées, et guidées par celles-ci.

Le capteur de mouvement comprend un boîtier 2, un moyen de fixation 3 à la barre de charge, par exemple par vis ou par adhésif, et un module électronique 4 compris dans le boîtier, représenté sous forme d'un rectangle en trait pointillé. Le boîtier 2 peut être non-conducteur, réalisé par exemple en matière plastique

Alternativement, le capteur de mouvement peut être rapporté sur une lame du tablier, par exemple la lame à laquelle est attachée la barre de charge. Cette disposition peut être particulièrement avantageuse si la barre de charge présente une épaisseur plus importante que les lames du tablier, par exemple lorsque la barre de charge a pour fonction d'obturer la fente longitudinale.

La figure 2 représente les différents blocs fonctionnels du capteur de mouvement. Celui-ci comprend un moyen de stockage d'énergie 41, par exemple une pile primaire. La pile primaire permet préférentiellement de donner au capteur de mouvement une autonomie fonctionnelle de 10 ans. Alternativement, deux piles primaires peuvent être utilisées, voire plus si le capteur de mouvement comprend un moyen de réception radiofréquences. Le moyen de stockage peut également être du type capacitif, en comprenant par exemple un supercondensateur rechargé par un panneau photovoltaïque.

Le moyen de stockage d'énergie est relié à un moyen inertiel d'alimentation conditionnelle 42, ou cellule de réveil, apte à alimenter les circuits électroniques du capteur uniquement lors d'une détection de mouvement supérieure à un seuil de détection prédéterminé. Ce moyen inertiel d'alimentation conditionnelle est également apte à poursuivre l'alimentation de circuits électroniques, suite à la réception d'un signal de maintien d'alimentation.

Préférentiellement, le seuil de détection est fixé à 0.2 fois la valeur de l'accélération de pesanteur (0.2 g) dans la direction principale de mouvement A1.

Le capteur de mouvement comprend également une unité de mesure et traitement 43 comprenant par exemple un accéléromètre intégré à poutre de silicium et un microcontrôleur. L'unité de mesure et traitement est reliée au moyen inertiel d'alimentation conditionnelle et est apte à lui fournir le signal de maintien d'alimentation. Elle est également reliée à une unité radiofréquences 44, de type circuit radio unidirectionnel (émetteur) ou de type circuit radio bidirectionnel (émetteur-récepteur). L'unité radiofréquences est raccordée à une antenne référencée 45 ou 46 selon les modes de réalisation.

La figure 3 représente schématiquement l'emplacement de composants du capteur de mouvement, selon une vue de face, dans un premier mode de réalisation de l'antenne.

Dans ce premier mode de réalisation, l'antenne 45 est de type dipôle. Un premier circuit imprimé 47 permet de supporter et connecter les composants électroniques. Ce premier circuit imprimé est au moins évidé là où sont disposés le moyen de stockage d'énergie, dans un premier logement 41a, et le moyen inertiel d'alimentation conditionnelle, dans un deuxième logement 42a. Préférentiellement, le premier circuit imprimé entoure donc le premier logement et le deuxième logement. Alternativement, le premier circuit imprimé est extérieur à un logement ou aux deux logements. Dans tous les cas, un plan principal du premier circuit imprimé traverse le moyen inertiel d'alimentation conditionnelle et avec le moyen de stockage comme il sera vu plus loin.

Le premier circuit imprimé comprend une antenne multispire imprimée 45a (schématisée par un carré hachuré) sur sa face supérieure, et un premier plan de masse 48 également sur sa face supérieure. L'antenne 45 est constituée par l'association de l'antenne imprimée et du plan de masse, formant dipôle.

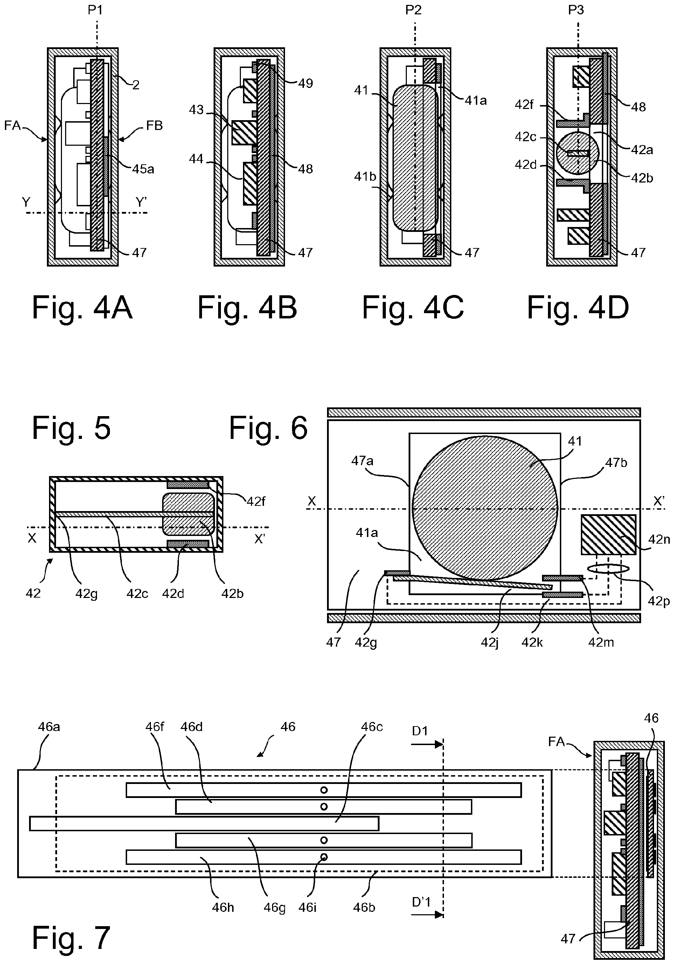

Cette disposition est précisée par les vues en coupe des figures 4A à 4D. Elle permet d'éloigner autant qu'il est possible l'antenne dipolaire de la barre de charge, par exemple de garantir une distance de 5 mm entre l'antenne et la barre de charge pour un boîtier d'épaisseur 6 mm.

Les figures 4A à 4D représentent des coupes successives du capteur de mouvement selon des plans de coupe perpendiculaires à la barre de charge de l'élément enroulable.

La figure 4A correspond à une coupe selon la direction A1A'1. Sur cette coupe, le boîtier 2 comprend une première face FA destinée à être en contact avec la barre de charge, et une deuxième face FB. L'antenne est disposée au plus près de FB. L'épaisseur de paroi du boîtier est préférentiellement inférieure ou égale à 1 mm.

Le premier circuit imprimé définit un plan principal P1, parallèle aux faces supérieure et inférieure du circuit, et coupant le circuit dans le milieu de son épaisseur. La trace de ce plan, perpendiculaire au plan de la figure 4A, est représentée par un trait de type tiret-point.

La figure 4B correspond à une coupe selon la direction B1B'1. Sur cette coupe figurent le premier plan de masse 48 sur la face supérieure du premier circuit imprimé, ainsi que des pistes 49 sur sa face inférieure. Des composants électroniques sont également coupés par le plan de coupe, par exemple un accéléromètre de l'unité de mesure et traitement 43 et un circuit de l'unité radiofréquences 44.

La figure 4C correspond à une coupe selon la direction C1C'1. Sur cette coupe figure le premier logement 41a, sous forme d'évidement dans le premier circuit imprimé, de la pile primaire, de type pile-bouton, formant le moyen de stockage d'énergie 41. Le moyen de stockage d'énergie est donc inséré dans un prolongement du premier circuit imprimé.

Des contacts flexibles 41b permettent la connexion, non représentée, de la pile primaire au premier circuit imprimé. Un plan médian du moyen de stockage défini par l'inclusion de sa plus grande dimension, par exemple, parallèle aux deux faces de la pile bouton, constitue un plan principal P2 du moyen de stockage. La trace de ce plan, perpendiculaire au plan de la figure 4C, est représentée par un trait de type tiret-point.

La figure 4D correspond à une coupe selon la direction D1D'1. Sur cette coupe figure le deuxième logement 42a, sous forme d'évidement dans le premier circuit imprimé, de la cellule de réveil formant le moyen inertiel d'alimentation conditionnelle 41. Le moyen d'alimentation conditionnelle est donc inséré dans un prolongement du premier circuit imprimé.

Une masse mobile 42b est suspendue par une lame flexible 42c entre deux contacts fixes 42d. Tout mouvement d'accélération suffisante, dans la direction principale de mouvement A1, provoque le déplacement de la masse mobile et un contact avec un des contacts fixes, selon la direction du mouvement. Une fois ce contact établi, un transistor ou autre dispositif non représenté de l'unité de mesure et traitement permet de poursuivre l'alimentation des circuits.

Un plan médian du moyen d'alimentation est défini par la plus grande dimension de la masse mobile et par la direction principale de mouvement et constitue un plan principal P3 du moyen d'alimentation. La trace de ce plan, perpendiculaire au plan de la figure 4D, est représentée par un trait de type tiret-point.

De manière générale, le boîtier du capteur de mouvement comprend une longueur de plus grande dimension de direction XX' formant un axe principal du capteur de mouvement, une largeur de direction ZZ' et une épaisseur de direction YY'. La direction ZZ' est parallèle à la direction principale de mouvement A1. Pour un volet roulant à déplacement vertical, les directions XX' et YY' sont horizontales, la direction ZZ' est verticale.

Un plan principal au sens de l'invention est au moins parallèle à un plan contenant des axes de direction XX' et YY', ceci s'appliquant au premier circuit imprimé, au moyen de stockage et à la cellule de réveil.

Le capteur de mouvement est donc de dimension aussi faible que possible dans la direction YY'.

La figure 5 représente en coupe, selon le plan principal P3, une cellule de réveil 42 du capteur de mouvement. Celle-ci comprend une masse mobile 42b suspendue par un premier clinquant 42c encastré par chaque extrémité dans la masse mobile et dans un boîtier-support 42g de la cellule de réveil, destiné à coopérer avec le deuxième logement 42a. La masse mobile et le clinquant sont en matériau électriquement conducteur. Un premier contact fixe 42d et un deuxième contact fixe 42f sont disposés de sorte à établir un contact électrique lors d'un mouvement de la masse mobile dans le plan principal P3 si ce mouvement présente une amplitude suffisante. La sensibilité de la cellule de réveil est notamment déterminée par la raideur du premier clinquant et ses dimensions, la masse de la masse mobile et le jeu entre masse mobile et contact fixe. Ces éléments sont dimensionnés de manière à établir un contact pour une accélération comprise entre 0.05 g et 0.4 g, préférentiellement une accélération de 0.2 g.

Le clinquant et les contacts fixes sont respectivement raccordés au premier circuit imprimé. Comme décrit plus haut, un deuxième moyen de contact tel un transistor est utilisé pour établir un contact permanent (pendant la durée du traitement du signal) dès qu'un contact fugitif est détecté sur la cellule de réveil.

La figure 6 représente en coupe selon le plan principal P3, ici confondu avec le plan principal P2, une variante de réalisation d'une cellule de réveil du capteur de mouvement. Cette variante présente l'intérêt de faire coopérer le moyen de stockage d'énergie et le moyen inertiel d'alimentation conditionnelle. Cette variante consiste à utiliser la pile primaire 41 en tant que masse mobile.

La pile primaire est disposée dans le premier logement 41a (ici confondu avec le deuxième logement) et se trouve guidée verticalement (ou selon la direction principale de mouvement) par des bords internes 47a et 47b du premier circuit imprimé délimitant le premier logement. La pile primaire repose sur un deuxième clinquant 42j, de type conducteur. Le deuxième clinquant est soudé par une première extrémité à une connexion 42g du premier circuit imprimé, la deuxième extrémité étant libre et apte se déplacer entre un troisième contact fixe 42k et/ou un quatrième contact fixes 42m, rapportés sur le premier circuit imprimé, en cas de mouvement vertical de la pile primaire. La connexion et les contacts fixes sont raccordés à un circuit de réveil 42n comme indiqué par un ensemble de traits pointillés 42p. Ainsi, un mouvement de la pile est détectable par l'apparition fugitive d'une liaison au pôle positif de la pile du circuit de réveil lors d'un mouvement égal au jeu séparant le deuxième clinquant et chaque contact fixe, tandis que le maintien de l'alimentation est rendu possible par la liaison permanente du deuxième clinquant à la connexion 42g.

Alternativement, le guidage vertical est assuré par des parois internes du boîtier. La liaison permanente au pôle négatif de la pile est assurée par un contact glissant, non représenté.

La figure 7 représente un deuxième mode de réalisation 46 de l'antenne du capteur de mouvement. Ce mode de réalisation utilise une antenne imprimée de type patch en réseau, dont l'usage n'est pas connu pour ce type d'application et avec des fréquences comprises entre quelques centaines de MHz (par exemple 868 MHz) et quelques GHz (par exemple 2.4 GHz).

Sur un deuxième circuit imprimé 46a, représenté en vue de dessus sur la partie gauche de la figure, sont imprimées des pistes conductrices parallèles servant respectivement d'élément excitateur 46c, de premier élément rayonnant 46d et de deuxième élément rayonnant 46g, de premier élément réflecteur 46f et de deuxième élément réflecteur 46h. Ces quatre derniers éléments sont raccordés à un deuxième plan de masse 46b par des passages conducteurs 46i (« vias ») dans l'épaisseur du deuxième circuit imprimé. Cette structure s'apparente donc à une antenne de type Yagi. Elle présente l'avantage de permettre un raccourcissement important des éléments rayonnants ou réflecteurs par rapport à la demi-longueur d'onde mais requiert un dimensionnement précis, optimisé par simulation. Elle présente surtout l'avantage d'être relativement insensible à la présence d'une masse métallique située en arrière du deuxième plan de masse 46b. Les éléments actifs de l'antenne, constitués par les pistes parallèles peuvent être désignés par d'autres termes selon la littérature.

Pour optimiser le couplage électromagnétique entre éléments, il est nécessaire que ceux-ci soient très proches les uns des autres et obéissent à une géométrie précise.

A titre d'exemple, pour une fréquence de 868 MHz, les pistes des éléments rayonnants et réflecteurs ont une largeur de 3.85 mm, tandis que la largeur de l'élément excitateur est de 2.75 mm. Le signal est injecté (ou recueilli) à l'extrémité gauche de l'élément excitateur. L'écartement entre élément excitateur et élément rayonnant est 0.34 mm, tandis qu'il est de 0.23 mm entre élément rayonnant et élément réflecteur. Ce dernier a une longueur de 104 mm et la longueur entre extrémité d'élément excitateur et extrémité d'élément réflecteur est 135 mm. Le deuxième plan de masse a pour longueur 150 mm et pour largeur 27 mm.

D'autres valeurs, et un nombre plus important d'éléments réflecteurs, sont bien-entendu possibles.

Des essais ont montré une perte de gain inférieure à 1 dB pour cette antenne, entre une situation où le capteur de mouvement est en champ libre et une situation où le capteur de mouvement est disposé sur la barre de charge d'un volet aluminium, l'antenne étant alors située à moins de 4 mm de la barre de charge. Ainsi, le capteur de mouvement présente l'avantage d'avoir le même comportement de transmission lorsqu'il est installé sur un volet en plastique PVC ou sur un volet en aluminium.

La partie gauche de la figure 7 représente une coupe du capteur de mouvement représentant les dispositions relatives du premier circuit imprimé 47 et de l'antenne 46 selon ce deuxième mode de réalisation.

Ainsi que suggéré par cette figure dans laquelle le premier plan de masse et le deuxième plan de masse sont en quasi-contact, une variante de réalisation (non représentée) consiste à utiliser un circuit imprimé unique multicouche comprenant un plan de masse unique dans une couche interne, à condition que les dimensions de ce plan de masse unique soient celles définies par la structure de l'antenne. Le plan de masse est donc intercalé entre les éléments actifs de l'antenne et la première face FA.

En variante de réalisation (non représentée), l'antenne dipolaire ou l'antenne de type réseau est réalisée par dépôt conducteur sur la deuxième face FB du boîtier. Une telle disposition, plus facile à mettre en œuvre pour une antenne dipolaire que dans le cas d'une antenne réseau, permet de gagner encore en épaisseur. Le dépôt est par exemple réalisé par sérigraphie avec une encre conductrice, puis recouvert d'un vernis protecteur et décoratif. Le contact électrique avec une sortie d'antenne de l'unité radiofréquences 44 est réalisé par une traversée conductrice à travers l'épaisseur du boîtier.

Alternativement, l'antenne est, au moins en partie, surmoulée dans l'épaisseur de la deuxième face du boîtier.

Alternativement, le premier circuit imprimé et le deuxième circuit imprimé sont disposés dans le prolongement l'un de l'autre, afin de garantir une plus faible épaisseur du boîtier.

Une réalisation particulièrement peu épaisse du capteur de mouvement consiste à disposer en succession selon la direction XX' : le deuxième circuit imprimé, le premier circuit imprimé, le logement de la cellule de réveil et enfin le logement des piles. Celles-ci peuvent être des piles bouton standard, de forme disque, mais préférentiellement un boîtier spécifique sous forme de rectangle à bords arrondis peut être développé afin d'augmenter la capacité de stockage pour une épaisseur donnée. Alternativement, un seul évidemment est réalisé dans le premier circuit imprimé pour servir de premier logement ou de deuxième logement tandis que l'autre logement est disposé d'un côté ou de l'autre du premier circuit imprimé selon la direction XX' .

Dans cette réalisation, le moyen de stockage d'énergie et le moyen inertiel d'alimentation conditionnelle sont insérés dans un prolongement du premier circuit imprimé, ce prolongement coupant à la fois le moyen de stockage d'énergie et le moyen inertiel d'alimentation conditionnelle.

Le prolongement du premier circuit imprimé peut donc s'entendre comme étant entouré par le premier circuit imprimé ou comme prolongeant le circuit imprimé à partir de l'un ou l'autre de ses bords dans la direction XX'.

Les termes : « inséré dans un prolongement du premier circuit imprimé » ont ici même sens que : « traversé (ou coupé) par un prolongement du premier circuit imprimé ».

## Revendications

1. Capteur de mouvement (1) pour émettre un signal lors d'une détection de mouvement d'un élément enroulable (10) d'un dispositif domotique (100) de fermeture, le capteur de mouvement comprenant un boîtier (2) apte à le fixer extérieurement à une barre de charge (18) positionnée à une extrémité libre de l'élément enroulable ; ledit boîtier comprenant une longueur de plus grande dimension de direction XX' formant l'axe principal du capteur de mouvement, une largeur de direction ZZ' parallèle à la direction de mouvement A1 et une épaisseur YY' ; et ce boîtier comprenant au moins :
- un moyen de mesure et de traitement (43) disposé sur un premier circuit imprimé (47),
- un moyen de stockage d'énergie (41), et
- un moyen inertiel d'alimentation conditionnelle (42),
**caractérisé en ce que** le circuit imprimé (47) s'étend selon un plan principal défini de manière parallèle à un plan contenant les axes de direction XX' et YY', **en ce que** le moyen de stockage d'énergie et/ou le moyen inertiel d'alimentation conditionnelle sont insérés, ou est inséré, dans un prolongement du premier circuit imprimé et le moyen de stockage d'énergie et/ou le moyen inertiel d'alimentation conditionnelle sont traversés, ou est traversé, par ledit plan principal du circuit imprimé.

2. Capteur de mouvement selon la revendication 1, **caractérisé en ce que** le boîtier (2) comprend des moyens de raccordement du moyen de stockage d'énergie (41) et/ou du moyen inertiel d'alimentation conditionnelle (42) au premier circuit imprimé (47).

3. Capteur de mouvement selon l'une des revendications précédentes, **caractérisé en ce que** le moyen de stockage d'énergie (41) comprend au moins une pile primaire.

4. Capteur de mouvement selon la revendication 3, **caractérisé en ce que** la pile primaire est connectée au premier circuit imprimé (47) par des contacts flexibles (41b).

5. Capteur de mouvement selon l'une des revendications précédentes, **caractérisé en ce que** le moyen inertiel d'alimentation conditionnelle (42) comprend une masse mobile conductrice (42b, 41) maintenue par un élément flexible conducteur (42c, 42j).

6. Capteur de mouvement selon la revendication 5, **caractérisé en ce que** le moyen inertiel d'alimentation conditionnelle (42) comprend des contacts fixes (42d, 42f, 42 k, 42m) disposés de sorte à établir un contact électrique lors d'un mouvement de la masse mobile conductrice (42b, 41).

7. Capteur de mouvement selon la revendication 6, **caractérisé en ce que** l'élément flexible conducteur (42c, 42j, 42k, 42m) et les contacts fixes (42d, 42f) sont raccordés au premier circuit imprimé (47) .

8. Capteur de mouvement selon l'une des revendications 5-7, **caractérisé en ce que** la masse mobile (42b, 41) comprend une pile primaire.

9. Capteur de mouvement selon la revendication 8, **caractérisé en ce que** la masse mobile (42b, 41) se trouve guidée par les bords internes (47a, 47b) du premier circuit imprimé (47).

10. Capteur de mouvement selon la revendication 8, **caractérisé en ce que** la masse mobile (42b, 41) se trouve guidée par des parois internes du boîtier (2) .

11. Capteur de mouvement selon l'une des revendications précédentes, **caractérisé en ce que** le boîtier (2) est non-conducteur.

12. Capteur de mouvement selon la revendication 11, **caractérisé en ce que** le premier circuit imprimé comprend un premier plan de masse et une antenne imprimée multispire, disposés sur une face supérieure du premier circuit imprimé pour former une antenne dipolaire, cette face supérieure jouxtant une face du boîtier (FB) la plus éloignée d'une face de boîtier (FA) apte à entrer en contact avec la barre de charge.

13. Capteur de mouvement selon la revendication 11, **caractérisé en ce que** le premier circuit imprimé est de type multicouche et comprend un plan de masse unique dans une couche intermédiaire et une antenne imprimée à éléments parallèles disposée sur une face supérieure du premier circuit imprimé pour former une antenne réseau, le plan de masse unique étant intercalé entre l'antenne imprimée et une face de boîtier (FA) apte à entrer en contact avec la barre de charge.

14. Capteur de mouvement selon la revendication 11, **caractérisé en ce qu'**il comprend un deuxième circuit imprimé comprenant un plan de masse sur une face inférieure et une antenne imprimée à éléments parallèles disposée sur une face supérieure pour former une antenne réseau, le plan de masse étant intercalé entre l'antenne imprimée et une face de boîtier (FA) apte à entrer en contact avec la barre de charge.

15. Capteur de mouvement selon la revendication 11, **caractérisé en ce qu'**il comprend une antenne obtenue par dépôt conducteur sur une face du boîtier (FB) la plus éloignée d'une face de boîtier (FA) apte à entrer en contact avec la barre de charge.

## Patentansprüche

1. Bewegungssensor (1), um ein Signal auszusenden, wenn eine Bewegung eines aufrollbaren Elements (10) einer haustechnischen Verschlussvorrichtung (100) nachgewiesen wird, wobei der Bewegungssensor ein Gehäuse (2) umfasst, das dazu in der Lage ist, ihn an der Außenseite einer Laststange (18) zu fixieren, die an einem freien Ende des aufrollbaren Elements positioniert ist, wobei das Gehäuse eine Länge mit einer größeren Abmessung in der Richtung XX' umfasst, die die Hauptachse des Bewegungssensors bildet, eine Breite in der Richtung ZZ', die parallel zur Bewegungsrichtung A1 ist, und eine Dicke YY', und wobei dieses Gehäuse mindestens Folgendes umfasst:
- Ein Mittel zum Messen und Verarbeiten (43), das auf einer ersten Leiterplatte (47) angeordnet ist,
- ein Mittel zur Speicherung von Energie (41), und
- ein Trägheitsmittel zur bedingten Versorgung (42),
**dadurch gekennzeichnet, dass** sich die Leiterplatte (47) auf einer Hauptebene erstreckt, die parallel zu einer Ebene definiert ist, die die Achsen der Richtung XX' und YY' enthält, dass die Mittel zur Speicherung von Energie und/oder das Trägheitsmittel zur bedingten Versorgung in eine Verlängerung der ersten Leiterplatte eingeführt ist oder eingeführt sind und das Mittel zur Speicherung von Energie und/oder das Trägheitsmittel zur bedingten Versorgung von der Hauptebene der Leiterplatte gequert wird oder gequert werden.

2. Bewegungssensor nach Anspruch 1, **dadurch gekennzeichnet, dass** das Gehäuse (2) Mittel zur Verbindung des Mittels zur Speicherung von Energie (41) und/oder des Trägheitsmittels zur bedingten Versorgung (42) an die erste Leiterplatte (47) umfasst.

3. Bewegungssensor nach einem der vorhergehenden Ansprüche, **dadurch gekennzeichnet, dass** das Mittel zur Speicherung von Energie (41) mindestens eine primäre Batterie umfasst.

4. Bewegungssensor nach Anspruch 3, **dadurch gekennzeichnet, dass** die primäre Batterie an die erste Leiterplatte (47) durch flexible Kontakte (41b) angeschlossen ist.

5. Bewegungssensor nach einem der vorhergehenden Ansprüche, **dadurch gekennzeichnet, dass** das inerte Mittel zur bedingten Versorgung (42) eine leitende bewegliche Masse (42b, 41) umfasst, die von einem leitenden flexiblen Element (42c, 42j) gehalten wird.

6. Bewegungssensor nach Anspruch 5, **dadurch gekennzeichnet, dass** das inerte Mittel zur bedingten Versorgung (42) feste Kontakte (42d, 42f, 42k, 42m) umfasst, die derart angeordnet sind, dass sie bei einer Bewegung der leitenden beweglichen Masse (42b, 41) einen elektrischen Kontakt herstellen.

7. Bewegungssensor nach Anspruch 6, **dadurch gekennzeichnet, dass** das leitende flexible Element (42c, 42j, 42k, 42m) und die festen Kontakte (42d, 42f) mit der ersten Leiterplatte (47) verbunden sind.

8. Bewegungssensor nach einem der Ansprüche 5 - 7, **dadurch gekennzeichnet, dass** die bewegliche Masse (42b, 41) eine primäre Batterie umfasst.

9. Bewegungssensor nach Anspruch 8, **dadurch gekennzeichnet, dass** die bewegliche Masse (42b, 41) durch die inneren Ränder (47a, 47b) der ersten Leiterplatte (47) geführt wird.

10. Bewegungssensor nach Anspruch 8, **dadurch gekennzeichnet, dass** die bewegliche Masse (42b, 41) durch innere Wände des Gehäuses (2) geführt wird.

11. Bewegungssensor nach einem der vorhergehenden Ansprüche, **dadurch gekennzeichnet, dass** das Gehäuse (2) nicht leitend ist.

12. Bewegungssensor nach Anspruch 11, **dadurch gekennzeichnet, dass** die erste Leiterplatte eine erste Massenebene und eine Antennenplatte mit zahlreichen Windungen umfasst, die auf einer oberen Seite der ersten Leiterplatte angeordnet sind, um eine zweipolige Antenne zu bilden, wobei diese obere Seite einer Seite des Gehäuses (FB) benachbart ist, die am weitesten entfernt ist von einer Gehäuseseite (FA), die dazu in der Lage ist, mit der Laststange in Kontakt zu treten.

13. Bewegungssensor nach Anspruch 11, **dadurch gekennzeichnet, dass** die erste Leiterplatte vom Typ mit mehreren Schichten ist und eine einzige Massenebene in einer Zwischenschicht umfasst, und eine gedruckte Antenne mit parallelen Elementen, die auf einer oberen Seite der ersten Leiterplatte angeordnet sind, um eine Netzantenne zu bilden, wobei die einzige Massenebene zwischen der gedruckten Antenne und einer Gehäuseseite (FA) angeordnet ist, die dazu in der Lage ist, mit der Laststange in Kontakt zu treten.

14. Bewegungssensor nach Anspruch 11, **dadurch gekennzeichnet, dass** er eine zweite Leiterplatte umfasst, umfassend eine Massenebene auf einer unteren Seite und eine gedruckte Antenne mit parallelen Elementen, die auf einer oberen Seite angeordnet sind, um eine Netzantenne zu bilden, wobei die Massenebene zwischen der gedruckten Antenne und einer Gehäuseseite (FA) angeordnet ist, die dazu in der Lage ist, mit der Laststange in Kontakt zu treten.

15. Bewegungssensor nach Anspruch 11, **dadurch gekennzeichnet, dass** er eine Antenne umfasst, die durch leitendes Beschichten auf einer Seite des Gehäuses (FB) erhalten wird, die am weitesten von einer Gehäuseseite (FA) entfernt ist, die dazu in der Lage ist, mit der Laststange in Kontakt zu treten.

## Claims

1. A motion sensor (1) for transmitting a signal when movement of a windable element (10) of the home automation closure device (100) is detected, the motion sensor comprising a housing (2) capable of fastening it outwardly to a loading bar (18) positioned at a free end of the windable element; said housing comprising a length with a larger dimension in direction XX' forming the main axis of the motion sensor, a width in direction ZZ' parallel to the direction of motion A1 and a thickness YY'; and this housing comprising at least:
- measuring and processing means (43) positioned on the first printed circuit (47),
- energy storage means (41), and
- inertial conditional supply means (42),
**characterized in that** the printed circuit (47) extends along a main plane defined parallel to a plane containing axes with directions XX' and YY', and **in that** the energy storage means and/or the inertial conditional supply means are inserted, or is inserted, in an extension of the first printed circuit, and **in that** the energy storage means and/or the inertial conditional supply means are passed through, or is passed through, by said main plane of the printed circuit.

2. The motion sensor according to claim 1, **characterized in that** the housing (2) comprises means for connecting the energy storage means (41) and/or inertial conditional supply means (42) to the first printed circuit (47).

3. The motion sensor according to one of the preceding claims, **characterized in that** the energy storage means (41) comprise at least one primary battery.

4. The motion sensor according to claim 3, **characterized in that** the primary battery is connected to the first printed circuit (47) by flexible contacts (41b).

5. The motion sensor according to one of the preceding claims, **characterized in that** the inertial conditional supply means (42) comprise a movable conductive mass (42b, 41) maintained by a flexible conductive element (42c, 42j).

6. The motion sensor according to claim 5, **characterized in that** the inertial conditional supply means (42) comprise stationary contacts (42d, 42f, 42k, 42m) positioned so as to establish electrical contact upon movement of the conductive movable mass (42b, 41).

7. The movement sensor according to claim 6, **characterized in that** the flexible conductive element (42c, 42j, 42k, 42m) and the stationary contacts (42d, 42f) are connected to the first printed circuit (47).

8. The motion sensor according to one of claims 5 to 7, **characterized in that** the movable mass (42b, 41) comprises a primary battery.

9. The motion sensor according to claim 8, **characterized in that** the movable mass (42b, 41) is guided by inner edges (47a, 47b) of the first printed circuit (47).

10. The motion sensor according to claim 8, **characterized in that** the movable mass (42b, 41) is guided by inner walls of the housing (2).

11. The motion sensor according to one of the preceding claims, **characterized in that** the housing (2) is non-conductive.

12. The motion sensor according to claim 11, **characterized in that** the first printed circuit comprises a first floor plan and a multi-turn printed antenna, positioned on an upper face of the first printed circuit to form a dipole antenna, that upper face being adjacent to a face of the housing (FB) furthest from a face of the housing (FA) capable of coming into contact with the loading bar.

13. The motion sensor according to claim 11, **characterized in that** the first printed circuit is of the multilayer type and comprise a single floor plan in an intermediate layer and a printed antenna with parallel elements arranged on an upper face of the first printed circuit to form an array antenna, the single floor plan being inserted between the printed antenna and the face of the housing (FA) capable of coming into contact with the loading bar.

14. The motion sensor according to claim 11, **characterized in that** it comprises a second printed circuit comprising a floor plan on a lower face and a printed antenna with parallel elements positioned on an upper face to form an array antenna, the floor plan being inserted between the printed antenna and a housing face (FA) capable of coming into contact with the loading bar.

15. The motion sensor according to claim 11, **characterized in that** it comprises an antenna obtained by conductive deposition on one face of the housing (FB) furthest from a face of the housing (FA) capable of coming into contact with the loading bar.
